# EUROPÄISCHE PATENTANMELDUNG

(11) **EP 2 937 545 A1**
(43) Veröffentlichungstag der Anmeldung: **28.10.2015**
(21) Anmeldenummer: 15000938.9
(22) Anmeldetag: 31.03.2015
(51) Int. Cl.: F02D 41/00, F02D 19/02, F02D 35/02, F02P 5/15, F02P 5/153

(54) **BETRIEBSVERFAHREN FÜR EINEN MAGERGASMOTOR UND MAGERGASMOTOR**

(30) Priorität: 25.04.2014 DE 102014005986
(71) Anmelder: MTU FRIEDRICHSHAFEN GMBH, 88045 Friedrichshafen (DE)
(72) Erfinder: Toth, Aron, 88048 Friedrichshafen (DE); Fimml, Wolfgang, 6912 Hörbranz (AT); Bernhard, Alexander, 88074 Meckenbeuren (DE)
(74) Vertreter: RRPS European Patent Attorneys

(57) **Zusammenfassung**

Die Erfindung betrifft ein Betriebsverfahren für einen Magergasmotor (1) mit mehreren Zylindern (2, 3, 4), wobei der Magergasmotor (1) eine zylinderindividuelle Gasdosierung, eine zylinderindividuelle Brennverlaufserfassung umfasst, wobei der Magergasmotor (1) von einem Steuergerät (5) derart geregelt wird, dass eine Brenndauer der einzelnen Zylinder (2, 3, 4) von dem Steuergerät (5) durch eine Veränderung eines Zündzeitpunktes zylinderindividuell geregelt wird und dass von dem Steuergerät (5) der Zündzeitpunkt zylinderindividuell derart geregelt wird, dass alle Zylinder (2, 3, 4) bezüglich ihres Umsatzpunktes derart gleich gestellt werden, dass ein definierter Umsatzpunkt zu einem definierten Kurbelwellenwinkel erreicht wird.

## Beschreibung

Die Erfindung betrifft ein Betriebsverfahren für einen Magergasmotor entsprechend dem Oberbegriff des Anspruchs 1 und einen Magergasmotor entsprechend dem Oberbegriff des Anspruchs 4.

Gasmotoren mit überstöchiometrischem Gas-Luft-Gemisch reagieren sehr sensibel auf kleinste Änderungen im Mischungsverhältnis. Dies führt im Realbetrieb zu dem Effekt, dass einzelne Zylinder durch stochastische oder systematische Unterschiede, welche sich zum Beispiel durch unterschiedliche Gusschargen oder durch die Position des einzelnen Zylinders als Eckzylinder oder als Mittenzylinder ergeben, eine sehr ungünstige Einflussnahme auf den Motorbetrieb haben. Dies kann zu einem deutlich erhöhten Spitzendruck oder auch zu einer Überhöhung einer zylinderindividuellen Abgasemission führen. Im Ergebnis muss der Motor auf den schlechtesten Zylinder abgestimmt werden, wobei dies stets eine geringere Leistung oder einem erhöhten Verbrauch der Gesamtmaschine bedeutet. Da das Brennverfahren derartiger Gasmotoren sehr empfindlich ist, führen auch kleinere Änderungen in der Gasqualität bzw. der Gaszusammensetzung oder daraus resultierende Ungenauigkeiten im Regelungskonzept bzw. der Gasdosierung zu abweichenden Emission. Dem muss durch eine pessimistische worst-case-Bedatung des Steuergerätes entgegen gewirkt werden. Grundsätzlich sind Gasmotoren bis dato für ein Gas kalibriert und laufen bei Verwendung dieses Gases stabil und sauber.

Aus der US 6 354 268 B1 ist es bekannt, zur Optimierung der Leistung eines Selbstzündungsmotors eine Regelung auf den maximalen Spitzendruck bzw. das Spitzendruckverhältnis an zwei ausgewählten Punkten vorzunehmen. Aus der DE 197 54 353 C2 ist ein Gasmotor bekannt, welcher insbesondere als Diesel-Gasmotor ausgebildet ist. Bei diesem erfolgt eine Regelung auf die Brennraumtemperatur. Hierzu sind Brennraumtemperatursensoren erforderlich. Die WO 2012/097389 A2 offenbart ein Verfahren zum Betreiben einer Brennkraftmaschine, bei welchem eine Zylindergleichstellung über eine zylinderindividuelle Steuerung oder Regelung des Zündzeitpunkts und/oder der Öffnungsdauer und/oder des Brennstoffversorgungsdrucks der jeweiligen Einbringvorrichtung für den Brennstoff herbeigeführt. Hierbei wird als Führungsgröße für eine Zylindergleichstellungsregelung vorzugsweise der Zylinderspitzendruck oder der Zylindermitteldruck oder die aus dem Zylinderdruckverlauf ermittelte zylinderindividuelle Luftüberschusszahl herangezogen.

Aufgabe der Erfindung ist es, ein Verfahren zum Betreiben eines Magergasmotors bzw. einen Magergasmotor vorzuschlagen, durch welches bzw. durch welchen es ermöglicht wird, eine ungünstige Einflussnahme von stochastischen oder systematischen Unterschieden zwischen einzelnen Zylindern auf den Motorbetrieb zu egalisieren und insbesondere die Emissionen auch unabhängig von der Gasqualität stabil zu halten.

Diese Aufgabe wird ausgehend von den Merkmalen des Oberbegriffs des Anspruchs 1 bzw. 4 durch die kennzeichnenden Merkmale des Anspruchs 1 bzw. 4 gelöst. Vorteilhafte Weiterbildungen sowie zweckmäßige Ausgestaltungen sind in den abhängigen Ansprüchen angegeben.

Das erfindungsgemäße Betriebsverfahren für einen Magergasmotor mit mehreren Zylindern einer zylinderindividuellen Gasdosierung, einer zylinderindividuellen Brennverlaufserfassung und einem Steuergerät umfasst die Schritte: dass eine Brenndauer der einzelnen Zylinder von dem Steuergerät durch eine Veränderung eines Zündzeitpunkts zylinderindividuell geregelt wird und dass von dem Steuergerät der Zündzeitpunkt zylinderindividuell derart geregelt wird, dass alle Zylinder bezüglich ihres Umsatzpunktes derart gleich gestellt werden, dass ein definierter Umsatzpunkt zu einem definierten Kurbelwellenwinkel erreicht wird. Durch die hinsichtlich der Umsatzpunkte vorgenommene Gleichstellung der Zylinder wird erreicht, dass alle Zylinder in ihren Brennverläufen angeglichen werden und damit aus in ihren Emissionen angeglichen werden. Das erfindungsgemäße Betriebsverfahren ist unabhängig von der Gasqualität. Somit sind auch die Brennverläufe und die Emissionen unabhängig von der Gasqualität an jedem Magergasmotor stabil. Weiterhin ermöglicht das erfindungsgemäße Betriebsverfahren, dass Magergasmotoren sehr nahe an ihre Designgrenzen abgestimmt werden. Weiterhin wird durch die Regelung des Brennverlaufs bzw. der Brenndauer auch die Form bzw. Gestalt der Brennrate fixiert, so dass sich für alle Zylinder des Magergasmotors durch die ähnlichen Temperaturen in den Zylindern ein ähnlicher Klopfabstand ergibt.

Weiterhin sieht das erfindungsgemäße Betriebsverfahren vor, für die zylinderindividuelle Brennverlaufserfassung zylinderindividuelle Druckmessungen auszuführen und auf der Basis dieser Druckmessungen mit dem Steuergerät eine zylinderindividuelle Druckverlaufsanalyse durchzuführen. Eine derartige Druckverlaufsanalyse lässt sich mit Standardbauteilen kostengünstig realisieren.

Entsprechend dem Betriebsverfahren ist es auch vorgesehen, den zur Regelung des Magergasmotors herangezogenen Umsatzspunktals zwischen einem 5%igen bis 15%igen Umsatzpunkt liegenden Umsatzpunkt und insbesondere als etwa zwischen 8% und 12 % liegenden Umsatzpunkt zu definieren und den herangezogenen Kurbelwellenwinkel, welcher in dem definierten Umsatzpunkt vorliegt, als zwischen -5° und 0° und insbesondere bei etwa -2° liegenden Kurbelwellenwinkel zu definieren. Versuche haben gezeigt, dass mit einer in derartigen Bereichen liegenden derartigen Wahl des definierten Umsatzpunktes und des definierten Kurbelwellenwinkels eine gute Abstimmung des Magermotors erfolgt.

Der erfindungsgemäße Magergasmotor umfasst mehrere Zylinder, ein Steuergerät für jeden Zylinder, wenigstens einen Drucksensor für jeden Zylinder und eine Zündeinheit für jeden Zylinder, wobei das Steuergerät eine elektronische Schaltung umfasst, wobei die elektronische Schaltung aus Messsignalen der Drucksensoren zylinderindividuelle Druckverläufe errechnet und hieraus zur Anpassung der Brenndauer zylinderindividuelle Steuersignale für eine zylinderindividuelle Zündeinrichtung errechnet und an die Zündeinrichtung der einzelnen Zylinder ausgibt und wobei die zylinderindividuellen Steuersignale für die Zündeinrichtung einen zylinderindividuelle Zündzeitpunkt vorgeben. Durch die hinsichtlich der Umsatzpunkte vorgenommene Gleichstellung der Zylinder wird erreicht, dass alle Zylinder in ihren Brennverläufen angeglichen werden und damit aus in ihren Emissionen angeglichen werden. Der erfindungsgemäße Magergasmotor lässt sich so unabhängig von der Gasqualität mit niedrigen Emissionen betreiben. Weiterhin ermöglicht der erfindungsgemäße Magergasmotor eine sehr nahe Abstimmung an seinen Designgrenzen. Weiterhin wird durch die Regelung des Brennverlaufs bzw. der Brenndauer auch die Form bzw. Gestalt der Brennrate fixiert, so dass sich für alle Zylinder des Magergasmotors durch die ähnlichen Temperaturen in den Zylindern ein ähnlicher Klopfabstand ergibt.

Durch eine Ausstattung des Magergasmotors mit wenigstens einer Gasdosiereinrichtung für jeden Zylinder und wenigstens einer Emissionserfassungseinrichtung lässt sich in weiterem Umfang auf den Betrieb des Magergasmotors Einfluss nehmen.

Im Sinne der Erfindung wird unter einem Magergasmotor ein auch als Magermotor oder Magermixmotor bezeichneter Verbrennungsmotor verstanden, welcher mit einem mageren bzw. mit einem überstöchiometrischen Gas-Luft-Gemisch betrieben wird. Hierbei ist unter "mager" zu verstehen, dass mehr Luft bzw. Verbrennungsluft vorhanden ist, als für die stöchiometrische Verbrennung des Brenngases im Zylinder benötigt wird. Dies bedeutet, dass Lambda > 1 ist.

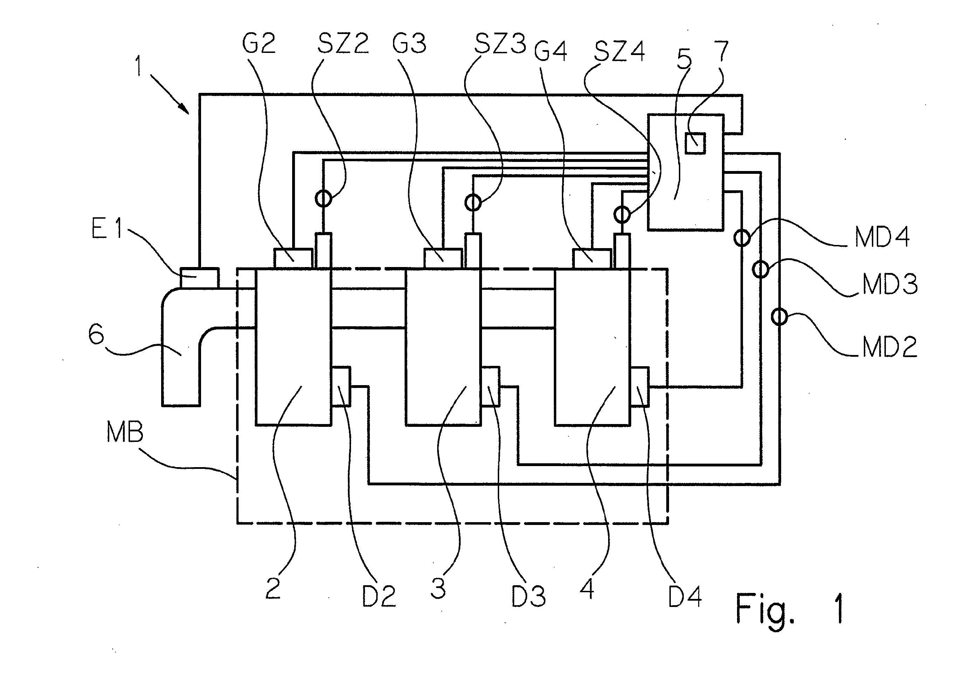

Im Folgenden wird die Erfindung anhand einer schematischen Darstellung näher erläutert. Es zeigt dabei
- Figur 1: eine schematische Ansicht eines Magergasmotors.

**Figur 1** zeigt einen Magergasmotor 1 in schematischer Ansicht. Der Magergasmotor 1 umfasst einen Motorblock MB mit mehrere Zylinder 2, 3, 4 ein Steuergerät 5, für jeden Zylinder 2, 3, 4, wenigstens einen Drucksensor D2, D3, D4 für jeden Zylinder 2, 3, 4, und eine Zündeinheit Z2, Z3, Z4 für jeden Zylinder 2, 3, 4. Optional umfasst der Magergasmotor 1 weiterhin wenigstens eine Gasdosiereinrichtung G2, G3, G4 für jeden Zylinder 2, 3, 4 und wenigstens eine Emissionserfassungseinrichtung E1. Hierbei erfasst die Emissionserfassungseinrichtung E1, sofern vorhanden, in einem Abgastrakt 6 des Magermotors 1 vorhandene Emissionswerte wie z.B. NOx-Emissionswerte. Das Steuergerät 5 umfasst eine elektronische Schaltung 7. Die elektronische Schaltung 7 errechnet aus Messsignalen MD2, MD3, MD4 der Drucksensoren D2, D3, D4 zylinderindividuelle Druckverläufe und errechnet hieraus zur zylinderindividuellen Anpassung der Brenndauer bzw. des Brennverlaufs zylinderindividuelle Steuersignale SZ2, SZ3, SZ4 für die zylinderindividuellen Zündeinrichtungen Z2, Z3, Z4 und gibt diese an die Zündeinrichtungen Z2, Z3, Z4 der einzelnen Zylinder 2, 3, 4 aus. Durch die zylinderindividuellen Steuersignale SZ2, SZ3, SZ4 für die Zündeinrichtungen Z2, Z3, Z4 wird ein zylinderindividueller Zündzeitpunkt vorgeben, welcher in Abhängigkeit von einem individuellen Druckverlauf des einzelnen Zylinders 2, 3, 4 derart ermittelt wurde, dass der Brennverlauf bzw. die Brenndauern der einzelnen Zylinder 2, 3, 4 gleich gestellt werden. Hierbei werden die zylinderindividuellen Zündzeitpunkte so gewählt, dass jeder Zylinder einen vordefinierten, für alle Zylinder gleichen Umsatzpunkt bei einer vordefinierten für alle Zylinder gleichen Kurbelwellenstellung erreicht.

## Patentansprüche

1. Betriebsverfahren für einen Magergasmotor (1) mit mehreren Zylindern (2, 3, 4), wobei der Magergasmotor (1) eine zylinderindividuelle Gasdosierung, eine zylinderindividuelle Brennverlaufserfassung umfasst, wobei der Magergasmotor (1) von einem Steuergerät (5) derart geregelt wird,
- dass eine Brenndauer der einzelnen Zylinder (2, 3, 4) von dem Steuergerät (5) durch eine Veränderung eines Zündzeitpunkts zylinderindividuell geregelt wird und
- dass von dem Steuergerät (5) der Zündzeitpunkt zylinderindividuell derart geregelt wird, dass alle Zylinder (2, 3, 4) bezüglich ihrer Umsatzpunktes derart gleich gestellt werden, dass ein definierter Umsatzpunkt zu einem definierten Kurbelwellenwinkel erreicht wird.

2. Betriebsverfahren für einen Magergasmotor (1) mit mehreren Zylindern (2, 3, 4) nach Anspruch 1, **dadurch gekennzeichnet, dass** für die zylinderindividuelle Brennverlaufserfassung zylinderindividuelle Druckmessungen ausgeführt werden und auf der Basis dieser Druckmessungen von dem Steuergerät (5) eine zylinderindividuelle Druckverlaufsanalyse durchgeführt wird.

3. Betriebsverfahren für einen Magergasmotor (1) mit mehreren Zylindern (2, 3, 4) nach wenigstens einem der vorhergehenden Ansprüche, **dadurch gekennzeichnet, dass** der zur Regelung des Magergasmotos (1) herangezogene Umsatzpunkt als zwischen einem 5%igen bis 15%igen Umsatzpunkt liegender Umsatzpunkt und insbesondere als etwa zwischen 8% und 12 % liegender Umsatzpunkt definiert wird und dass der herangezogene Kurbelwellenwinkel, welcher in dem definierten Umsatzpunkt vorliegt, als zwischen -5° und 0° und insbesondere bei etwa -2° liegender Kurbelwellenwinkel definiert wird.

4. Magergasmotor (1) mit mehreren Zylindern (2, 3, 4) insbesondere nach wenigstens einem der vorhergehenden Ansprüche, **dadurch gekennzeichnet, dass** der Magergasmotor (1)
- ein Steuergerät (5), für jeden Zylinder (2, 3, 4),
- wenigstens einen Drucksensor (D2, D3, D4) für jeden Zylinder (2, 3, 4) und
- Zündeinrichtung für jeden Zylinder (2, 3, 4) umfasst,
- wobei das Steuergerät (5) eine elektronische Schaltung (7) umfasst,
- wobei die elektronische Schaltung (7) aus Messsignalen der Drucksensoren (MD2, MD3, MD4) zylinderindividuelle Druckverläufe errechnet und hieraus zur Anpassung der Brenndauer zylinderindividuelle Steuersignale (S2, S3, S4) für eine zylinderindividuelle Zündeinrichtung errechnet und an die Zündeinrichtungen der einzelnen Zylinder (2, 3, 4) ausgibt,
- wobei die zylinderindividuellen Steuersignale (S2, S3, S4) für die Zündeinrichtungen einen zylinderindividuellen Zündzeitpunkt vorgeben.

5. Magergasmotor (1) nach Anspruch 4, **dadurch gekennzeichnet, dass** der Magergasmotor
- wenigstens eine Gasdosiereinrichtung (G2, G3, G4) für jeden Zylinder (2, 3, 4) und
- wenigstens eine Emissionserfassungseinrichtung (E1) umfasst.
